# EUROPEAN PATENT APPLICATION

(11) **EP 4 636 624 A1**
(43) Date of publication of application: **22.10.2025**
(21) Application number: 24216265.9
(22) Date of filing: 28.11.2024
(51) Int. Cl.: G06F 21/55, G06F 21/56

(54) **MITIGATING RANSOMWARE ACTIVITY OF AN OPERATING SYSTEM BY MONITORING FROM USER SPACE**

(30) Priority: 17.04.2024 US 202418637578
(71) Applicant: Red Hat, Inc., Raleigh, NC 27601 (US)
(72) Inventor: COSENTINO, Andrea, Raleigh, 27601 (US); ANTINORI, Paolo, Raleigh, 27601 (US)
(74) Representative: Murgitroyd & Company

(57) **Abstract**

Ransomware activity in operating systems can be mitigated by monitoring from user space. For example, a computing environment can generate an affinity score indicating a likelihood of ransomware activity associated with an operating system based on a first set of system calls detected from a user space of the operating system within a first time window. The computing environment can buffer one or more write operations from the first set of system calls during a second time window based on the affinity score. The computing environment can update the affinity score based on a second set of system calls detected from the user space of the operating system within the second time window. The computing environment can block execution of the one or more write operations based on the updated affinity score exceeding a predefined threshold.

## Description

### TECHNICAL FIELD

The present disclosure relates generally to information security and intrusion detection. More specifically, but not by way of limitation, this disclosure relates to mitigating ransomware activity of an operating system by monitoring from user space.

### BACKGROUND

Cyber-attacks are an ever-increasing problem in today's digitally connected world. Cyber-attacks can take on a variety of forms, such as denial of service (DoS) attacks; attacks involving viruses, Trojans, worms, or ransomware; and intrusion attempts. Ransomware attacks can involve encrypting critical files of a computing device, thereby compromising performance or security of the computing device. To combat cyber-attacks, organizations can employ hardware-based or software-based cyber-security tools, such as firewalls, intrusion detection systems, or antivirus software.

### SUMMARY

According to a first aspect of the disclosure, there is provided a method comprising detecting, by a processing device executing from a user space of an operating system, a first set of system calls to the operating system within a first time window; generating, by the processing device, an affinity score associated with a pattern of ransomware activity detected in the first set of system calls; buffering, by the processing device, first write operations from the first set of system calls during a second time window in response to generating the affinity score; updating, by the processing device, the affinity score based on a second set of system calls to the operating system detected from the user space during the second time window; and blocking, by the processing device, execution of first write operations from the first set of system calls and second write operations from the second set of system calls based on the updated affinity score exceeding a predefined threshold.

The method may further comprise determining that the updated affinity score does not exceed the predefined threshold; and subsequent to the second time window, executing the first write operations and the second write operations based on the updated affinity score not exceeding the predefined threshold.

Generating the affinity score may further comprise detecting the pattern of ransomware activity within the first set of system calls by comparing the first set of system calls to a dataset comprising a plurality of ransomware patterns. The affinity score may quantify similarity between the pattern of ransomware activity detected within the first set of system calls and a ransomware pattern of the plurality of ransomware patterns from the dataset.

Alternatively, generating the affinity score may comprise providing the first set of system calls as input to a trained machine learning model configured to generate an output comprising the affinity score; and receiving the output comprising the affinity score from the trained machine learning model.

The method may further comprise, in response to the updated affinity score exceeding the predefined threshold, transmitting a notification of ransomware activity in the first set of system calls and the second set of system calls; and continuing buffering and blocking write operations in system calls for the operating system.

The first write operations or second write operations may comprise encryption operations or decryption operations.

According to a second aspect of the current disclosure, there is provided a non-transitory computer-readable medium comprising instructions that when executed by a processing device cause the processing device to generate an affinity score indicating a likelihood of ransomware activity associated with an operating system based on a first set of system calls detected from a user space of the operating system within a first time window; buffer one or more write operations from the first set of system calls during a second time window based on the affinity score; update the affinity score based on a second set of system calls detected from the user space of the operating system within the second time window; and block execution of the one or more write operations based on the updated affinity score exceeding a predefined threshold.

The instructions may further cause the processing device to determine that the updated affinity score does not exceed the predefined threshold; and subsequent to the second time window, execute the one or more write operations based on the updated affinity score not exceeding the predefined threshold.

Detecting a ransomware pattern within the first set of system calls may comprise comparing the first set of system calls to a dataset comprising a plurality of ransomware patterns. The affinity score may quantify similarity between the ransomware pattern detected within the first set of system calls and a ransomware pattern of the plurality of ransomware patterns from the dataset.

Alternatively, generating the affinity score may comprise providing the first set of system calls as input to a trained machine learning model configured to generate an output comprising the affinity score; and receiving the output comprising the affinity score from the trained machine learning model.

The instructions may further cause the processing device to, in response to the updated affinity score exceeding the predefined threshold, transmit a notification of ransomware activity in the first set of system calls or the second set of system calls; and continue buffering and blocking write operations in system calls for the operating system.

The one or more write operations may comprise encryption operations or decryption operations.
According to a third aspect of the present disclosure, there is provided a system comprising a kernel space of an operating system; and a user space of the operating system, the user space configured to detect, within a first time window, a first set of system calls of the operating system that are exposed to the user space by the kernel space; generate an affinity score indicating a likelihood of ransomware activity associated with the first set of system calls; buffer one or more write operations from the first set of system calls based on the affinity score during a second time window; update the affinity score based on a second set of system calls detected during the second time window; and block execution of the one or more write operations based on the updated affinity score exceeding a predefined threshold.

The user space may be further configured to determine that the updated affinity score does not exceed the predefined threshold; and subsequent to the second time window, execute the one or more write operations based on the updated affinity score not exceeding the predefined threshold.

The system may further comprise a dataset comprising a plurality of ransomware patterns, and the user space may be configured to generate the affinity score by detecting a ransomware pattern within the first set of system calls by comparing the first set of system calls to the plurality of ransomware patterns in the dataset. The affinity score may quantify similarity between the ransomware pattern detected within the first set of system calls and a ransomware pattern of the plurality of ransomware patterns from the dataset.

Alternatively, the user space may be configured to generate the affinity score by providing the first set of system calls as input to a trained machine learning model configured to generate an output comprising the affinity score; and receiving the output comprising the affinity score from the trained machine learning model.

The user space may be further configured to, in response to the updated affinity score exceeding the predefined threshold, transmit a notification of ransomware activity in the first set of system calls and the second set of system calls; and continue buffering and blocking write operations in system calls for the operating system.

The first write operations or second write operations may comprise encryption operations or decryption operations.

### BRIEF DESCRIPTION OF THE DRAWINGS

FIG. 1 is a block diagram of an example of a system for mitigating ransomware activity by monitoring from user space, according to some aspects of the present disclosure.
FIG. 2 is a block diagram of another example of a system for mitigating ransomware activity by monitoring from user space, according to some aspects of the present disclosure.
FIG. 3 is a flowchart of an example of a process for mitigating ransomware activity by monitoring from user space, according to some aspects of the present disclosure.
FIG. 4 is a block diagram of an example of a system for mitigating ransomware activity by monitoring processes from user space, according to some aspects of the present disclosure.
FIG. 5 is a block diagram of another example of a system for mitigating ransomware activity by monitoring processes from user space, according to some aspects of the present disclosure.
FIG. 6 is a flowchart of an example of a process for mitigating ransomware activity by monitoring processes from user space, according to some aspects of the present disclosure.

### DETAILED DESCRIPTION

A host system, such as a server, can be part of a computing system used to control one or more hardware systems. The host system can be communicatively coupled to other components of the computing system via a computer network, such as the Internet, thereby increasing an attack surface of the host system of the computing system. Malicious actors may use the computer network to distribute ransomware that can encrypt a file system of the host system to prevent access to critical files stored in the file system. The critical files can be used to perform one or more functionalities associated with the hardware systems. The malicious actor may restrict the access to the critical files until a ransom is provided to the malicious actor. In some cases, if the ransomware remains undetected in the host system, the ransomware can spread, such as via the computer network, to affect other components of the computing system. Thus, the ransomware can compromise performance and safety of the hardware systems controlled by the computing system.

Some examples of the present disclosure can overcome one or more of the issues mentioned above by monitoring, from user space of a host system, operations and traffic on the host system to identify ransomware patterns. For example, system calls to the operating system of the host system can be compared to datasets of historical ransomware activity. A match between the system calls and the historical ransomware activity can cause the host system to generate an affinity score quantifying similarity between the system calls and the historical ransomware activity. The affinity score can indicate a likelihood of ransomware activity. Therefore, at the first occurrence of a potential ransomware pattern, even at low levels of similarity, a detection and mitigation approach can be activated. For example, all write operations from the system calls can be buffered while monitoring from the user space continues for a time window. At the end of the time window, the affinity score can be updated based on system calls detected during the time window. If the affinity score is below a predefined threshold (e.g., indicating that ransomware activity is not detected), the buffer can be flushed and the write operations can be executed. If the affinity score is above the predefined threshold (e.g., indicating that ransomware activity has been detected), the write operations can be blocked, thus preventing security risks from the potential ransomware activity.

In this way, security risks from ransomware attacks can be quickly detected, prevented, and mitigated to protect the host system. Such techniques are easily scalable and can be performed in parallel on multiple host systems in the computing system. Further, monitoring system calls from user space (e.g., via the kernel of the operating system exposing system calls to the user space) can be a relatively lightweight and accurate monitoring method. For instance, in relation to ransomware, encryption is often an important index. A ransomware attacker will commonly attempt to hide their presence in log files to increase difficulty of detection. But it may be difficult or impossible for a ransomware attacker to manipulate system calls. Thus, monitoring system calls from user space can increase detection of ransomware attacks. Further, monitoring in user space rather than in kernel space can prevent inadvertent risks to the kernel.

In some examples, user space of the host system may also monitor new processes that are generated during time windows (e.g., the time window in which write operations are buffered). The buffering can be initiated in response to detecting that a number of system calls related to encryption or decryption that exceeds a predefined threshold have been detected. The host system may also be disconnected from the network and may be restarted. New system calls related to encryption will therefore begin to fail. The new processes generated during the time window can additionally be compared the dataset of historical ransomware activity to detect matching patterns. For example, the host system may generate the affinity score based on the similarity between the new processes and the historical ransomware activity. If there is a match (e.g., the affinity score is above a predefined threshold), files associated with the matched system call (e.g., encryption files to be written to the file system) can be moved to an isolated storage system (e.g., a cloud storage file system or a separate and disconnected storage system).

Once the ransomware file has been isolated, buffering write operations can be discontinued. A backup can be used to recover the status of the host system before the encryption file was received or before encryption started. The host system can then be reconnected to the network to resume operations. In this way, ransomware files can be quickly discovered and isolated, preventing or mitigating the effects of a ransomware attack on the host system.

In a particular example, a server can have a Linux operating system with extended Berkeley Packet Filter (eBPF) technology. Because a bug or error in a kernel program of the operating system can lead to crashes, bugs, and other unexpected behaviors, access to kernel space is typically restricted to the operating system and specialized processes. Thus, user applications may be prevented from directly accessing kernel space to protect the kernel program. But some events that may be beneficial to monitor for security reasons, such as system calls, may only be visible at the kernel level. Using eBPF can allow certain aspects of the kernel program to be exposed to user space, thus allowing monitoring of system calls or processes from user space.

Through eBPF, a probe in user space can monitor for abnormal behaviors, such as by tracking encryption or decryption system calls or by identifying patterns of system calls. System call behavior detected during a time window (e.g., 5 minutes, 10 minutes, etc.) can be compared to datasets of historical ransomware patterns. In some examples, a machine learning model trained on the historical ransomware patterns can be used to generate an affinity score indicating a similarity between the system calls and the historical ransomware patterns. When a possible similarity is identified between the system calls and the dataset (e.g., the affinity score has a nonzero value), an extended data retention (XDR) approach can be implemented.

For example, the file system for the operating system can be set to read-only. Thus, any write operations in the system calls received during the time window and during a subsequent time window can be buffered. The system calls received during the subsequent time window can be used to update the affinity score. At the end of the subsequent time window, if the updated affinity score is above a predefined threshold, all buffered write operations can be blocked to prevent ransomware activity. If the updated affinity score is below the predefined threshold, the buffer can be flushed and the write operations can be executed. In some examples, multiple iterations of time windows in which the write operations are buffered and the affinity score is updated can be performed. For example, write operations may be buffered for five or ten iterations of time windows with a duration of ten minutes. This can ensure that slow-moving ransomware attacks can be properly identified and mitigated.

In some examples, the eBPF monitoring may also involve the kernel exposing the new processes to the user space. User space may use eBPF execsnoop to trace all new processes that are generated within the time window. In such examples, the affinity score may also be generated by comparing the new processes to historical ransomware patterns. In some examples, buffering of the write operations can be initiated in response to detecting more than a threshold number of encryption or decryption system calls within the time window. A relatively high number of encryption or decryption system calls may indicate that a ransomware attack is occurring.

Once more than the threshold number of encryption or decryption system calls are received during the time window, the host system can be flagged for suspected ransomware activity. The file system for the operating system can be set to read-only (causing all subsequent write operations to the file system to be buffered) and the host system can be disconnected from the network. Subsequent system calls related to encryption will therefore start to fail. The host system can then isolate the most recent operations done on the host system by looking at execsnoop logs saved from the previous time window and using pattern matching or machine learning to recognize abnormal behavior. If there is a match (e.g., if an affinity score indicating a similarity between logs and historical ransomware behavior exceeds a predefined threshold), the host system can isolate one or more files associated with the match (e.g., ransomware encryption files) to place in a sandbox. Once the one or more files have been removed from the host system, the read-only constraint on the file system can be removed, a backup can be used to recover status of the host system before encryption started or before the one or more files were received, and the host system can be reconnected to the network to resume operations.

Illustrative examples are given to introduce the reader to the general subject matter discussed herein and are not intended to limit the scope of the disclosed concepts. The following sections describe various additional features and examples with reference to the drawings in which like numerals indicate like elements, and directional descriptions are used to describe the illustrative aspects, but, like the illustrative aspects, should not be used to limit the present disclosure.

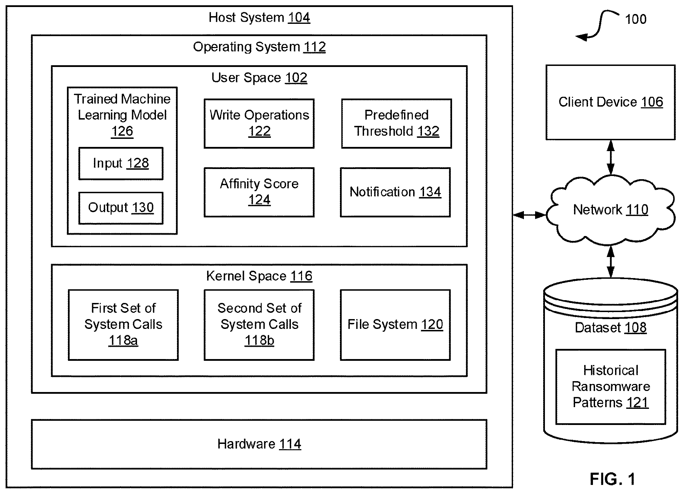

FIG. 1 is a block diagram of an example of a system 100 for mitigating ransomware activity by monitoring from user space 102, according to some aspects of the present disclosure. Components within the system 100 may be communicatively coupled via a network 110, such as a local area network (LAN), wide area network (WAN), the Internet, a vehicle bus, or any combination thereof. For example, the system 100 can include the host system 104 and additional host systems (not pictured) that are communicatively coupled through the network 110. The host system 104 may also be communicatively coupled through the network 110 to a client device 106 and a dataset 108. Examples of the host system 104 and the client device 106 can include a desktop computer, laptop computer, server, mobile phone tablet, or any suitable computing device. In some examples, the host system 104 and the client device 106 (or any other host system in the system 100) can perform operations, including storage, and can transmit messages (e.g., via the network 110) to communicate with each other in the system 100.

The host system 104 can include hardware 114 and software, such as operating system 112 (e.g., a Linux operating system). The operating system 112 can have separate address spaces, including a user space 102 and a kernel space 116. The kernel space 116 can be reserved for running privileged operations, such as system calls 118a-b, writing to a file system 120, the operating system kernel, device drivers, and the like. Access to the kernel space 116 may be restricted to prevent crashes, data corruption, or other malfunctions. User space 102 can be restricted to all code (e.g., applications, programs, libraries, etc.) that run outside of kernel space 116. Processes in user space 102 can make system calls to request services from the operating system 112, such as accessing hardware 114, creating and executing new processes, communicating with kernel services, and the like.

Typically, processes in user space 102 may be restricted from accessing logs of system calls in kernel space 116. But the operating system 112 can use extended Berkeley Packet Filter (eBPF) technology to safely extend the capabilities of the kernel without requiring changes to kernel source code or loading kernel modules. For example, some features of kernel space 116 can be exposed to user space 102 such that monitoring of system calls 118a-b can be performed from user space 102. Exposing system calls 118a-b via eBPF can allow for improved ransomware detection and mitigation for the host system 104. Although embodiments are described herein with respect to eBPF technology in Linux operating systems, any such technology that similarly exposes features of the kernel to user space 102 may be used.

For example, other host systems or the client device 106 may send requests to the host system 104 to perform operations. These operations may involve the user space 102 performing system calls 118a-b to kernel space 116. But the client device 106 may be a malicious actor that is targeting the host system 104 using malware, such as ransomware, to gain control of or restrict access to the host system 104. For example, the malicious actor can exploit a connectivity of the host system 104 to the network 110 (e.g., the Internet) to store a ransomware file in a file system 120 of the host system 104. In some examples, the file system 120 can be part of a storage system of the host system 104 that can include one or more files used by the host system 104 to perform operations or execute services. The ransomware file can encrypt the file system 120 such that files of the file system 120 are inaccessible by the host system 104. The malicious actor then can request a ransom from an entity associated with the host system 104 or the system 100 to recover access to the file system 120. For example, once the malicious actor receives the ransom from the entity, the malicious actor may provide a decryption key to decrypt the file system 120 and regain access to the files in the file system 120. It may be beneficial to swiftly detect and mitigate the presence of ransomware files or requests to write ransomware files to the file system 120.

Using eBPF, processes in user space 102 can monitor system calls to the operating system 112 during time windows (e.g., minutes, hours, days, or any suitable length of time). For example, a first set of system calls 118a can be detected during a first time window. The host system 104 may monitor the first set of system calls 118a for abnormal behavior. The abnormal behavior can correspond to ransomware activity related to encryption or decryption of the file system 120 (e.g., as initiated by a system call). Although the abnormal behavior is generally described herein as being related to encryption or decryption of the file system 120 caused by ransomware, other types of malware (e.g., wiper malware) may cause or contribute to the abnormal behavior.

Abnormal behavior can be identified by comparing the first set of system calls 118a to historical ransomware patterns 121 in the dataset 108. For example, the host system 104 may perform a similarity search between the first set of system calls 118a and the historical ransomware patterns 121 to generate an affinity score 124. The affinity score 124 can represent a percentage of similarity between patterns in the first set of system calls 118a and the historical ransomware patterns 121. Examples of algorithms used to perform the similarity search can include an Aho-Corasick algorithm or a Knuth-Morris-Pratt algorithm. When using the Aho-Corasick algorithm, the historical ransomware patterns 121 can be used as a dictionary. Additionally or alternatively, the affinity score 124 can be generated using a trained machine learning model 126. The trained machine learning model 126 can be trained using the dataset 108. The first set of system calls 118a can be provided as input 128 to the trained machine learning model 126, which can generate an output 130 that includes the affinity score 124 quantifying the similarity between the first set of system calls 118a and the historical ransomware patterns 121. The host system 404 can receive the output 430 from the trained machine learning model 426.

Any ransomware activity indicated by the affinity score 124 (e.g., a nonzero value) may activate detection and mitigation techniques. For example, all write operations 122 requested by the first set of system calls 118a can be buffered due to the file system 120 being set to read-only. This may prevent ransomware files from the first set of system calls 118a from being written to the file system 120. Write operations can continue to be buffered in subsequent time windows, during which subsequent system calls (e.g., a second set of system calls 118b received by the operating system 112 during a second time window) can also be detected. The affinity score 124 can be updated based on the second set of system calls 118b. In some examples, write operations 122 can be buffered and the affinity score 124 can be updated over a predefined number of iterations of time windows. This can ensure that slow-moving malware operations can be detected.

If the updated affinity score 124 ever exceeds a predefined threshold 132 (e.g., indicating the presence of ransomware activity), the buffered write operations 122 can be blocked. The host system 104 can continue buffering and blocking write operations 122 in system calls for the operating system 112. Additionally, if the affinity score 124 exceeds the predefined threshold 132, a notification 134 indicating ransomware activity in the first set of system calls 118a or the second set of system calls 118b can be transmitted to an entity associated with the host system 104 or a system 100 (e.g., to trigger manual evaluation of the ransomware activity). Alternatively, once the predefined number of iterations of time windows have passed, if the updated affinity score 124 has not ever exceeded the predefined threshold 132 (e.g., indicating a lack of ransomware activity), the buffer can be flushed (e.g., the file system 120 can no longer be set to read-only) and the write operations 122 can proceed.

Although FIG. 1 depicts a certain number and arrangement of components, other examples may include more components, fewer components, different components, or a different number of the components that is shown in FIG. 1. For instance, the system 100 can include more host systems than are shown in FIG. 1.

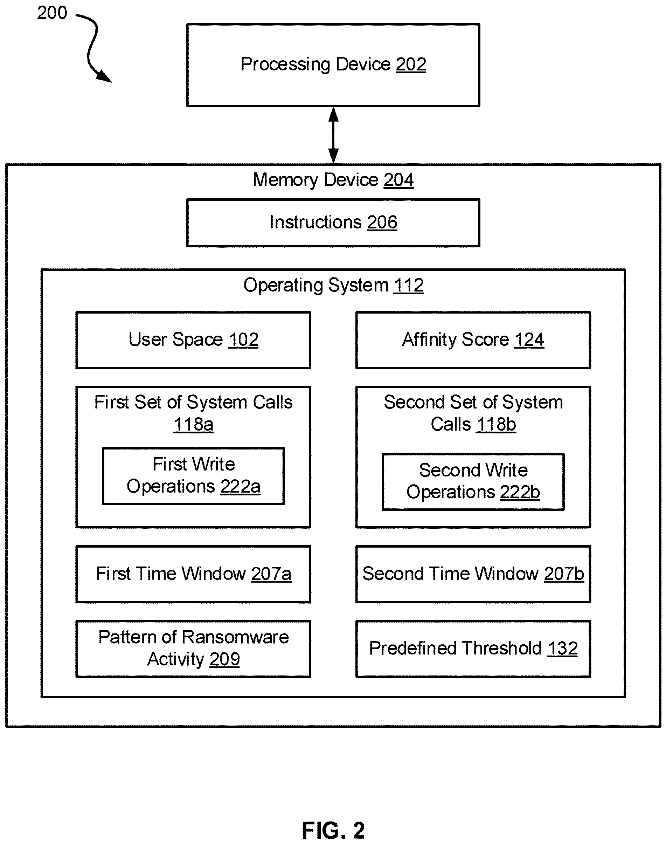

FIG. 2 is a block diagram of another example of a system 200 for mitigating ransomware activity by monitoring from user space 102, according to some aspects of the present disclosure. The system 200 depicted in FIG. 2 includes a processing device 202 communicatively coupled with a memory device 204. In some examples, the components of the system 200, such as the processing device 202 and the memory device 204, may be part of a same computing device, such as host system 104. In other examples, the processing device 202 and the memory device 204 can be included in separate computing devices that are communicatively coupled.

The processing device 202 can include one processing device or multiple processing devices. Non-limiting examples of the processing device 202 include a Field-Programmable Gate Array (FPGA), an application-specific integrated circuit (ASIC), a microprocessor, etc. The processing device 202 can execute instructions 206 stored in the memory device 204 to perform operations. In some examples, the instructions 206 can include processor-specific instructions generated by a compiler or an interpreter from code written in any suitable computer-programming language, such as C, C++, C#, etc.

The memory device 204 can include one memory or multiple memories. The memory device 204 can be non-volatile and may include any type of memory that retains stored information when powered off. Non-limiting examples of the memory device 204 include electrically erasable and programmable read-only memory (EEPROM), flash memory, or any other type of non-volatile memory. At least some of the memory can include a non-transitory computer-readable medium from which the processing device 202 can read instructions 206. The non-transitory computer-readable medium can include electronic, optical, magnetic, or other storage devices capable of providing the processing device with computer-readable instructions or other program code. Examples of the non-transitory computer-readable medium include magnetic disk(s), memory chip(s), ROM, RAM, an ASIC, a configured processor, optical storage, or any other medium from which a computer processor can read the instructions 206.

In some examples, the processing device 202 can execute the instructions 206 to perform some or all of the functionality described herein. For example, the processing device 202 can detect, from a user space 102 of an operating system 112, a first set of system calls 118a to the operating system 112 within a first time window 207a. The processing device 202 can generate an affinity score 124 associated with a pattern of ransomware activity 209 detected in the first set of system calls 118a. The processing device 202 can buffer first write operations 222a from the first set of system calls 118a during a second time window 207b in response to generating the affinity score 124. The processing device 202 can update the affinity score 124 based on a second set of system calls 118b to the operating system 112 detected from the user space 102 during the second time window 207b. The processing device 202 can then block execution of first write operations 222a from the first set of system calls 118a and second write operations 222b from the second set of system calls 218b based on the updated affinity score 124 exceeding a predefined threshold 132.

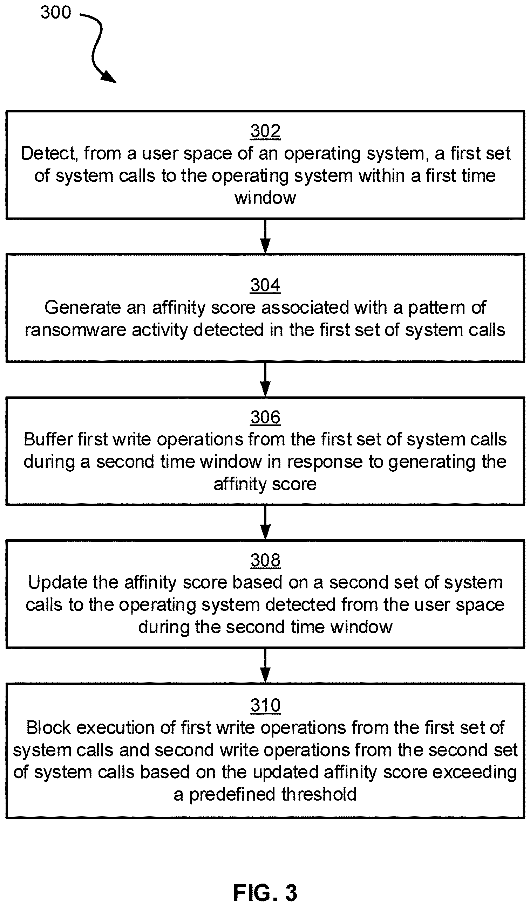

FIG. 3 is a flowchart of an example of a process 300 for mitigating ransomware activity by monitoring from user space 102, according to some aspects of the present disclosure. In some examples, the processing device 202 can implement some or all of the steps shown in FIG. 3. Additionally, in some examples, the processing device 202 can be executing the host system 104 of FIG. 1 to implement some or all of the steps shown in FIG. 3. Other examples can include more steps, fewer steps, different steps, or a different order of the steps than is shown in FIG. 3. The steps of FIG. 3 are discussed below with reference to the components discussed above in relation to FIGS. 1 and 2.

At block 302, the processing device 202 can detect, from a user space 102 of an operating system 112, a first set of system calls 118a to the operating system 112 within a first time window 207a. The first set of system calls 118a may be exposed to user space 102 by the kernel space 116 of the operating system 112, such as by using eBPF technology to run privileged programs. Some of the first set of system calls 118a may involve write operations 122 to write files to a file system 120 of the operating system 112. In some examples, the write operations 122 may involve encrypting or decrypting files in the file system 120. Not all encryption or decryption operations may be associated with ransomware activity, but an excessive number of encryption or decryption operations, or patterns of behavior that are consistent with historical ransomware patterns 121, may indicate that a ransomware attack may be occurring.

At block 304, the processing device 202 can generate an affinity score 124 associated with a pattern of ransomware activity 209 detected in the first set of system calls 118a. For example, the first set of system calls 118a can be compared to historical ransomware patterns 121 in a dataset 108, such as by executing string searching algorithms to perform similarity searches. In other examples, a trained machine learning model 126 can use the first set of system calls 118a to identify the pattern of ransomware activity 209 and generate the affinity score 124. The trained machine learning model 126 can be trained through an at least partially automated (e.g., with little to no human involvement) process during which training data (e.g., the historical ransomware patterns 121) can be iteratively supplied to the machine learning model. Using the training data, the trained machine learning model 126 can identify patterns related to the training data or identify and quantify relationships between the training data and output data. The affinity score 124 may quantify (e.g., as an amount or a percentage) a similarity between the pattern of ransomware activity 209 detected in the first set of system calls 118a and one or more of the historical ransomware patterns 121. Generating an affinity score 124 (e.g., with a nonzero value) can indicate that there may be ransomware activity occurring or about to occur due to the first set of system calls 118a.

At block 306, the processing device 202 can buffer first write operations 222a from the first set of system calls 118a during a second time window 207b in response to generating the affinity score 124, such as by setting the file system 120 of the operating system 112 to read-only. Buffering write operations can prevent ransomware encryption files from being written to the file system 120. Additionally, second write operations 222b from a second set of system calls 118b received during the second time window 207b can also be buffered. System calls can continue to be buffered until the read-only status of the file system 120 is revoked.

At block 308, the processing device 202 can update the affinity score 124 based on a second set of system calls 118b to the operating system 112 detected from the user space 102 during the second time window 207b. Some ransomware attacks may occur over the course of an extended period of time (e.g., over minutes or hours) or over multiple system calls, and thus it may be beneficial to continue monitoring system calls while buffering write operations 122. In some examples, detection of system calls and updating of the affinity score 124 while write operations 122 are buffered can occur over several (e.g., a predefined number of) iterations of time windows.

At block 310, the processing device 202 can block execution of first write operations 222a from the first set of system calls 118a and second write operations 222b from the second set of system calls 118b based on the updated affinity score 124 exceeding a predefined threshold 132. The updated affinity score 124 exceeding the predefined threshold 132 can indicate that ransomware activity is likely to be occurring in the first set of system calls 118a or the second set of system calls 118b, and thus one or more write operations 122 requested by the system calls 118a-b may involve malicious encryption operations or decryption operations. The processing device 202 can continue to buffer system calls and buffer write operations. In some examples, the processing device 202 can additionally transmit a notification 134 (e.g., to an entity associated with the system 200) indicating the detected ransomware activity to prompt further mitigation operations.

In alternative examples, the processing device 202 may determine that the updated affinity score 124 does not exceed the predefined threshold 132, even after monitoring for the predefined number of iterations of time windows. This may indicate that ransomware activity is not detected in the first set of system calls 118a or the second set of system calls 118b. In such examples, the processing device 202 can, subsequent to the second time window 207b, execute one or more write operations (e.g., from the first write operations 222a or the second write operations 222b) based on the updated affinity score 124 not exceeding the predefined threshold 132. That is, the buffer on the write operations can be flushed and the processing device 202 may resume execution of operations, such as operations requested by system calls.

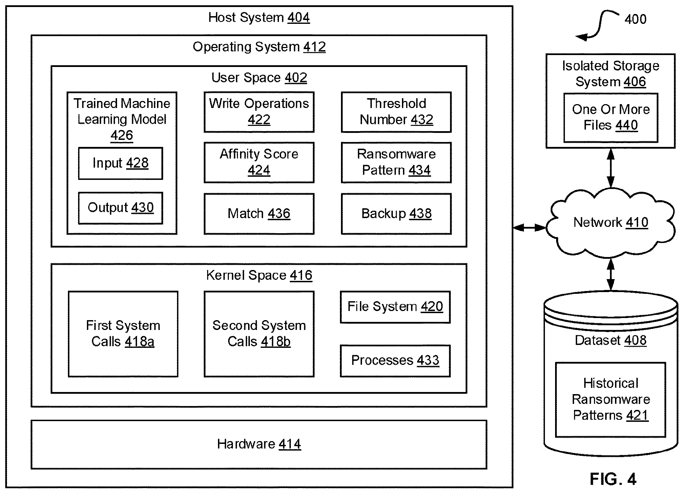

FIG. 4 is a block diagram of an example of a system 400 for mitigating ransomware activity by monitoring processes from user space 402, according to some aspects of the present disclosure. Components within the system 400 may be communicatively coupled via a network 410, such as a local area network (LAN), wide area network (WAN), the Internet, a vehicle bus, or any combination thereof. For example, the system 400 can include the host system 404 and additional host systems (not pictured) that are communicatively coupled through the network 410. The host system 404 may also be communicatively coupled through the network 410 to an isolated storage system 406 and a dataset 408. Examples of the host system 404 can include a desktop computer, laptop computer, server, mobile phone tablet, or any suitable computing device. In some examples, the host system 404 and the isolated storage system 406 (or any other host system in the system 400) can perform operations, including storage, and can transmit messages (e.g., via the network 410) to communicate with each other in the system 400.

The host system 404 can include hardware 414 and software, such as operating system 412 (e.g., a Linux operating system). The operating system 412 can have separate address spaces, including a user space 402 and a kernel space 416. The kernel space 416 can be reserved for running privileged operations, such as system calls 418a-b, writing to a file system 420, specialized or privileged processes 433, the operating system kernel, device drivers, and the like. Access to the kernel space 416 may be restricted to prevent crashes, data corruption, or other malfunctions. User space 402 can be restricted to all code (e.g., applications, programs, libraries, etc.) that run outside of kernel space 416. Processes in user space 402 can make system calls to request services from the operating system 412, such as accessing hardware 414, creating and executing new processes, communicating with kernel services, and the like.

Typically, processes in user space 402 may be restricted from accessing logs of system calls in kernel space 416. But the operating system 412 can use extended Berkeley Packet Filter (eBPF) technology to safely extend the capabilities of the kernel without requiring changes to kernel source code or loading kernel modules. For example, some features of kernel space 416 can be exposed to user space 402 such that monitoring of system calls 418a-b can be performed from user space 402. Exposing system calls 418a-b via eBPF can allow for improved ransomware detection and mitigation for the host system 404. Although embodiments are described herein with respect to eBPF technology in Linux operating systems, any such technology that similarly exposes features of the kernel to user space 402 may be used.

For example, other host systems or external client devices may send requests to the host system 404 to perform operations. These operations may involve the user space 402 performing system calls 418a-b to kernel space 416. But the requests may be sent by a malicious actor that is targeting the host system 404 using malware, such as ransomware, to gain control of or restrict access to the host system 404. For example, the malicious actor can exploit a connectivity of the host system 404 to the network 410 (e.g., the Internet) to store a ransomware file in a file system 420 of the host system 404. In some examples, the file system 420 can be part of a storage system of the host system 404 that can include one or more files used by the host system 404 to perform operations or execute services. The ransomware file can encrypt the file system 420 such that files of the file system 420 are inaccessible by the host system 404. The malicious actor then can request a ransom from an entity associated with the host system 404 or the system 400 to recover access to the file system 420. For example, once the malicious actor receives the ransom from the entity, the malicious actor may provide a decryption key to decrypt the file system 420 and regain access to the files in the file system 420. It may be beneficial to swiftly detect and mitigate the presence of ransomware files or requests to write ransomware files to the file system 420.

Using eBPF, processes in user space 102 can monitor system calls to the operating system 412 during time windows (e.g., minutes, hours, days, or any suitable length of time). Additionally, using eBPF, processes 433 generated in kernel space 416 can be monitored from user space 402. New processes 433 generated when suspicious activity is flagged for the host system 404 can be additionally used to identify ransomware activity. For example, the host system 404 may track the number of write operations 422 that are encryption operations or decryption operations from first system calls 318a received during a first time window. If more than a threshold number 432 of encryption operations or decryption operations are received during the first time window, this may indicate that ransomware activity is being performed and may trigger detection and mitigation processes. Additionally or alternatively, the host system 404 may generate an affinity score 424 quantifying similarity between the first system calls 418a and historical ransomware patterns 421 in the dataset 408. If the affinity score 424 has a nonzero value, this may also indicate that ransomware activity is being performed and may trigger detection and mitigation processes.

For example, the host system 404 may automatically place the file system 420 in the operating system 412 into a read-only state, causing all system calls involving write operations 422 to be buffered. In some examples, the host system 404 may also disconnect from the network 410 and may be restarted. User space 402 can continue to monitor system calls (e.g., second system calls 418b in a second time window) to identify abnormal behavior, such as a ransomware pattern 434. Write operations 422 for the second system calls 418b can also be buffered. Any new processes 433 generated during the first time window or second time window (or any subsequent time window in which write operations 422 are buffered) can be used to recognize abnormal behavior, such as a ransomware pattern 434.

The ransomware pattern 434 can be identified by comparing execsnoop logs from the previous time window (e.g., the new processes 433) and using pattern matching or machine learning. For example, the host system 404 may perform a similarity search between the processes 433 and the historical ransomware patterns 421 to identify the ransomware pattern 434. Examples of algorithms used to perform the similarity search can include an Aho-Corasick algorithm or a Knuth-Morris-Pratt algorithm. When using the Aho-Corasick algorithm, the historical ransomware patterns 421 can be used as a dictionary. Additionally or alternatively, the ransomware pattern 434 using a trained machine learning model 426. The trained machine learning model 426 can be trained using the dataset 408. The new processes 433 can be provided as input 428 to the trained machine learning model 426, which can generate an output 430 that includes the affinity score 424 quantifying the similarity between the new processes 433 and the historical ransomware patterns 421. The host system 404 can receive the output 430 from the trained machine learning model 426. Additionally or alternatively, similarity searches or machine learning can be applied to the first system calls 418a or the second system calls 418b to identify the ransomware pattern 434. In some examples, buffering of write operations 422 and detection of ransomware patterns 434 can continue for multiple iterations of time windows, such as ten iterations of time windows having a duration of ten minutes. This can enable detection of malicious activity that is performed over a relatively longer period (e.g., in an attempt to avoid detection).

If a ransomware pattern 434 is detected that is a match 436 to one or more of the historical ransomware patterns 421 in the dataset 408, this may indicate the presence of ransomware activity in the first system calls 418a or second system calls 418b. The host system 404 can identify one or more files 440 associated with the match. The one or more files 440 (e.g., ransomware files) may involve encryption operations or decryption operations targeting files in the file system 420. The host system 404 can then isolate the one or more files 440 to place in a sandbox, such as by moving the one or more files to the isolated storage system 406 (e.g., a cloud storage file system or a separate and disconnected storage). Once the one or more files 440 have been removed from the host system 404, the host system 404 can remove the read-only constraint from the file system 420. The host system 404 can use a previously saved backup 438 to restore the operating system 412 to a state from before encryption started (e.g., due to the one or more files 440) or before the one or more files 440 were received by the host system 404. The host system 404 can then reconnect to the network 410, restart, and resume operations.

In examples where no ransomware pattern 434 or match 436 is detected, even after a predefined number of iterations of time windows have passed, the buffer can be flushed (e.g., the read-only constraint can be removed from the file system 420) and write operations 422 to the file system 420 can be re-enabled.

Although FIG. 4 depicts a certain number and arrangement of components, other examples may include more components, fewer components, different components, or a different number of the components that is shown in FIG. 4. For instance, the system 400 can include more host systems than are shown in FIG. 4.

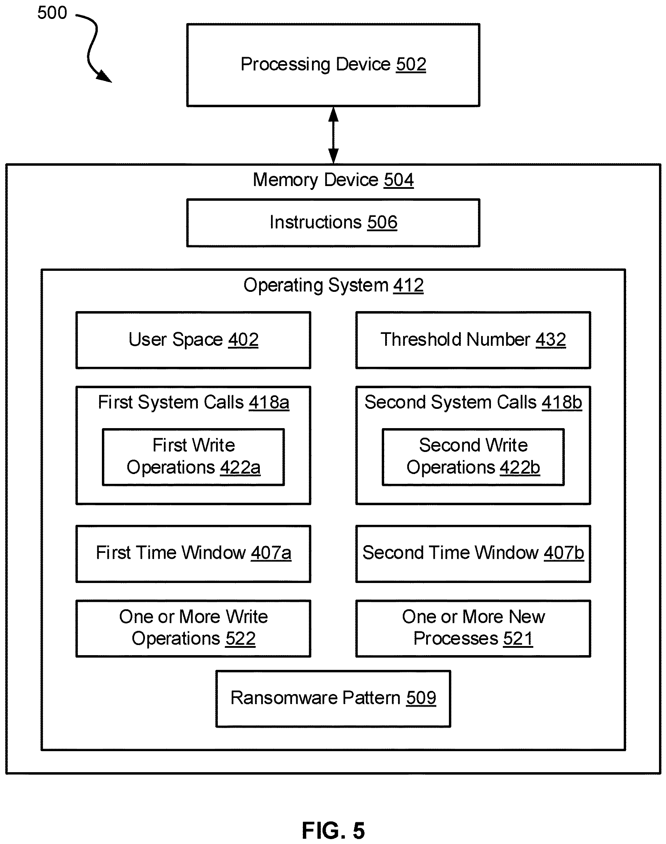

FIG. 5 is a block diagram of another example of a system 500 for mitigating ransomware activity by monitoring processes from user space 402, according to some aspects of the present disclosure. The system 500 depicted in FIG. 5 includes a processing device 502 communicatively coupled with a memory device 504. In some examples, the components of the system 500, such as the processing device 502 and the memory device 504, may be part of a same computing device, such as host system 104 or host system 404. In other examples, the processing device 502 and the memory device 504 can be included in separate computing devices that are communicatively coupled.

The processing device 502 can include one processing device or multiple processing devices. Non-limiting examples of the processing device 502 include a Field-Programmable Gate Array (FPGA), an application-specific integrated circuit (ASIC), a microprocessor, etc. The processing device 502 can execute instructions 506 stored in the memory device 504 to perform operations. In some examples, the instructions 506 can include processor-specific instructions generated by a compiler or an interpreter from code written in any suitable computer-programming language, such as C, C++, C#, etc.

The memory device 504 can include one memory or multiple memories. The memory device 504 can be non-volatile and may include any type of memory that retains stored information when powered off. Non-limiting examples of the memory device 504 include electrically erasable and programmable read-only memory (EEPROM), flash memory, or any other type of non-volatile memory. At least some of the memory can include a non-transitory computer-readable medium from which the processing device 502 can read instructions 506. The non-transitory computer-readable medium can include electronic, optical, magnetic, or other storage devices capable of providing the processing device with computer-readable instructions or other program code. Examples of the non-transitory computer-readable medium include magnetic disk(s), memory chip(s), ROM, RAM, an ASIC, a configured processor, optical storage, or any other medium from which a computer processor can read the instructions 506.

In some examples, the processing device 502 can execute the instructions 506 to perform some or all of the functionality described herein. For example, the processing device 502 can determine that more than a threshold number 432 of first system calls 418a to an operating system 412 involving encryption or decryption were detected from user space 402 during a first time window 407a. The processing device 502 can buffer one or more write operations 522 from second system calls 418b during a second time window 407b in response to determining that more than the threshold number 432 of first system calls 418a involving encryption or decryption were detected. The processing device 502 can identify a ransomware pattern 509 based on the first system calls 418a, the second system calls 418b, or one or more new processes 521 detected by user space 402 as being generated during the first time window 407a or the second time window 407b. The processing device 502 can block execution of the first system calls 418a involving encryption or decryption based on the ransomware pattern 509.

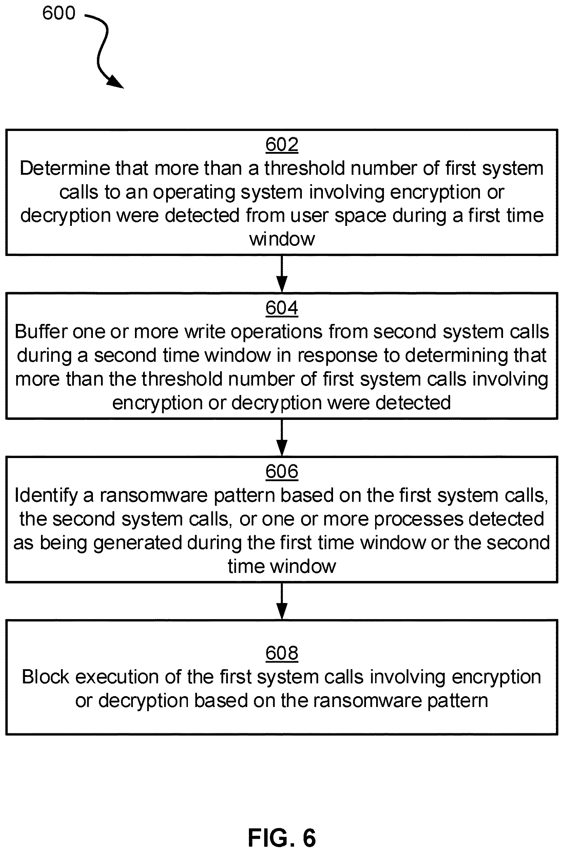

FIG. 6 is a flowchart of an example of a process 600 for mitigating ransomware activity by monitoring processes from user space, according to some aspects of the present disclosure. In some examples, the processing device 202 or the processing device 502 can implement some or all of the steps shown in FIG. 5. Additionally, in some examples, the processing device 502 can be executing the host system 104 of FIG. 1 or the host system 404 of FIG. 4 to implement some or all of the steps shown in FIG. 6. Other examples can include more steps, fewer steps, different steps, or a different order of the steps than is shown in FIG. 6. The steps of FIG. 6 are discussed below with reference to the components discussed above in relation to FIGS. 4 and 5.

At block 602, the processing device 502 can determine that more than a threshold number 432 of first system calls 418a to an operating system 412 involving encryption or decryption were detected from user space 402 during a first time window 407a. The first time window 407a can have any predefined duration, such as thirty minutes. More than a threshold number 432 of encryption operations or decryption operations being requested or performed may indicate ransomware activity.

At block 604, the processing device 502 can buffer one or more write operations 522 from second system calls 418b during a second time window 407b in response to determining that more than the threshold number 432 of first system calls 418a involving encryption or decryption were detected. For example, a file system 420 for the operating system 412 can be set to a read-only state, preventing any write operations 522 (including encryption writes) from being performed. The one or more write operations 522 can continue to be buffered for subsequent write operations in subsequent system calls, such as second system calls 418b received by the operating system 412 during the second time window 407b. In some examples, the processing device 502 can save a list of all files in the file system 420 interested in encryption. This can include encryption files or encryption operations on files in the file system 420 requested by the system calls 418a-b. The processing device 502 can disconnect the file system 420, and, in some examples, the system 400 from the network 410. The processing device 502 may additionally restart the system 400 or the host system 404. Subsequent system calls that are received may therefore start to fail.

In addition to monitoring system calls from the user space 402, the processing device 502 may additionally monitor one or more new processes 521 generated by the operating system 412 during the first time window 407a or the second time window 407b. For example, eBPF execsnoop can be used to trace the one or more processes 521.

At block 606, the processing device 502 can identify a ransomware pattern 509 based on the first system calls 418a, the second system calls 418b, or one or more new processes 521 detected as being generated during the first time window 407a or the second time window 407b. For example, the processing device 502 can identify a match 436 between any of the first system calls 418a, the second system calls 418b, or one or more new processes 521 and a dataset 408 including historical ransomware patterns 421. The processing device 502 can identify, based on the match 436, one or more files 440 associated with an encryption operation or a decryption operation from the first system calls 418a or the second system calls 418b. The identified one or more files 440 may be ransomware files.

At block 608, the processing device 502 can block execution of the first system calls 418a or the second system calls 418b involving encryption or decryption based on the ransomware pattern 509. Additionally, the processing device 502 can move the one or more files 440 to an isolated storage system 406 (e.g., a cloud storage file system or a separate and disconnected storage system). After the one or more files 440 are isolated and removed, the processing device 502 can restore a backup 438 of the operating system 412 that was saved prior to the one or more files 440 being saved to the file system 420, or prior to the one or more files 440 being received by the operating system 412. The processing device 502 can reconnect the system 400 or the host system 404 to the network 410 and, in some examples, may additionally restart the system 400 or the host system 404. In this way, malicious activity can be swiftly detected and ransomware files can be removed from the operating system 412 before ransomware attacks are performed.

As used below, any references to a series of examples is to be understood as a reference to each of those examples disjunctively (e.g., "Examples 1-4" is to be understood as "Examples 1, 2, 3, or 4").

Example 1 is a non-transitory computer-readable medium comprising instructions that are executable by a processing device for causing the processing device to: generate an affinity score indicating a likelihood of ransomware activity associated with an operating system based on a first set of system calls detected from a user space of the operating system within a first time window; buffer one or more write operations from the first set of system calls during a second time window based on the affinity score; update the affinity score based on a second set of system calls detected from the user space of the operating system within the second time window; and block execution of the one or more write operations based on the updated affinity score exceeding a predefined threshold.

Example 2 is the non-transitory computer-readable medium of example(s) 1, further comprising instructions that are executable by the processing device for causing the processing device to: determine that the updated affinity score does not exceed the predefined threshold; and subsequent to the second time window, execute the one or more write operations based on the updated affinity score exceeding the predefined threshold.

Example 3 is the non-transitory computer-readable medium of example(s) 1, further comprising instructions that are executable by the processing device for causing the processing device to generate the affinity score by: detecting a ransomware pattern within the first set of system calls by comparing the first set of system calls to a dataset comprising a plurality of ransomware patterns.

Example 4 is the non-transitory computer-readable medium of example(s) 3, wherein the affinity score quantifies similarity between the ransomware pattern detected within the first set of system calls and a ransomware pattern of the plurality of ransomware patterns from the dataset.

Example 5 is the non-transitory computer-readable medium of example(s) 1, further comprising instructions that are executable by the processing device for causing the processing device to generate the affinity score by: providing the first set of system calls as input to a trained machine learning model configured to generate an output comprising the affinity score; and receiving the output comprising the affinity score from the trained machine learning model.

Example 6 is the non-transitory computer-readable medium of example(s) 1, further comprising instructions that are executable by the processing device for causing the processing device to, in response to the updated affinity score exceeding the predefined threshold: transmit a notification of ransomware activity in the first set of system calls and the second set of system calls; and continue buffering and blocking write operations in system calls for the operating system.

Example 7 is the non-transitory computer-readable medium of example(s) 1, wherein the one or more write operations comprise encryption operations or decryption operations.

Example 8 is a method comprising: detecting, by a processing device executing from a user space of an operating system, a first set of system calls to the operating system within a first time window; generating, by the processing device, an affinity score associated with a pattern of ransomware activity detected in the first set of system calls; buffering, by the processing device, first write operations from the first set of system calls during a second time window in response to generating the affinity score; updating, by the processing device, the affinity score based on a second set of system calls to the operating system detected from the user space during the second time window; and blocking, by the processing device, execution of first write operations from the first set of system calls and second write operations from the second set of system calls based on the updated affinity score exceeding a predefined threshold.

Example 9 is the method of example(s) 8, further comprising: determining that the updated affinity score does not exceed the predefined threshold; and subsequent to the second time window, executing the first write operations and the second write operations based on the updated affinity score exceeding the predefined threshold.

Example 10 is the method of example(s) 8, wherein generating the affinity score further comprises: detecting the pattern of ransomware activity within the first set of system calls by comparing the first set of system calls to a dataset comprising a plurality of ransomware patterns.

Example 11 is the method of example(s) 10, wherein the affinity score quantifies similarity between the pattern of ransomware activity detected within the first set of system calls and a ransomware pattern of the plurality of ransomware patterns from the dataset.

Example 12 is the method of example(s) 8, further comprising generating the affinity score by: providing the first set of system calls as input to a trained machine learning model configured to generate an output comprising the affinity score; and receiving the output comprising the affinity score from the trained machine learning model.

Example 13 is the method of example(s) 8, further comprising, in response to the updated affinity score exceeding the predefined threshold: transmitting a notification of ransomware activity in the first set of system calls and the second set of system calls; and continuing buffering and blocking write operations in system calls for the operating system.

Example 14 is the method of example(s) 8, wherein the first write operations or second write operations comprise encryption operations or decryption operations.

Example 15 is a system comprising: a kernel space of an operating system; a user space of the operating system, the user space configured to: detect, within a first time window, a first set of system calls of the operating system that are exposed to the user space by the kernel space; generate an affinity score indicating a likelihood of ransomware activity associated with the first set of system calls; buffer one or more write operations from the first set of system calls based on the affinity score during a second time window; update the affinity score based on a second set of system calls detected during the second time window; and block execution of the one or more write operations based on the updated affinity score exceeding a predefined threshold.

Example 16 is the system of example(s) 15, wherein the user space is further configured to: determine that the updated affinity score does not exceed the predefined threshold; and subsequent to the second time window, execute the one or more write operations based on the updated affinity score exceeding the predefined threshold.

Example 17 is the system of example(s) 15, further comprising: a dataset comprising a plurality of ransomware patterns, wherein the user space is further configured to generate the affinity score by detecting a ransomware pattern within the first set of system calls by comparing the first set of system calls to the plurality of ransomware patterns in the dataset.

Example 18 is the system of example(s) 17, wherein the affinity score quantifies similarity between the ransomware pattern detected within the first set of system calls and a ransomware pattern of the plurality of ransomware patterns from the dataset.

Example 19 is the system of example(s) 15, wherein the user space is further configured to generate the affinity score by: providing the first set of system calls as input to a trained machine learning model configured to generate an output comprising the affinity score; and receiving the output comprising the affinity score from the trained machine learning model.

Example 20 is the system of example(s) 15, wherein the user space is further configured to, in response to the updated affinity score exceeding the predefined threshold: transmit a notification of ransomware activity in the first set of system calls and the second set of system calls; and continue buffering and blocking write operations in system calls for the operating system.

Example 21 is a system comprising: a processing device; and a memory device including instructions that are executable by the processing device for causing the processing device to: determine that more than a threshold number of first system calls to the operating system detected from user space during a first time window involve encryption or decryption; in response to determining that more than the threshold number of first system calls involve encryption or decryption: buffer one or more write operations from the first system calls during a second time window; detect, from user space, one or more new processes generated during the first time window or the second time window; identify a ransomware pattern from second system calls received during the second time window or from the one or more new processes; and block execution of the first system calls and second system calls involving encryption or decryption based on the ransomware pattern.

Example 22 is the system of example(s) 21, wherein the memory device further comprises instructions that are executable by the processing device for causing the processing device to identify the ransomware pattern by: identifying a match between a dataset comprising a plurality of ransomware patterns and the one or more new processes, the first system calls, or the second system calls.

Example 23 is the system of example(s) 22, wherein the memory device further comprises instructions that are executable by the processing device for causing the processing device to, in response to identifying the match: identify, based on the match, one or more files associated with an encryption operation or a decryption operation from the first system calls or second system calls; set a file system comprising the one or more files to read-only by buffering write operations to the file system; move the one or more files from the file system to an isolated storage system; and disconnect the system from a network.

Example 24 is the system of example(s) 23, wherein the memory device further comprises instructions that are executable by the processing device for causing the processing device to, subsequent to moving the one or more files to the isolated storage system: re-enable write operations to the file system; restore a backup of the operating system that was saved prior to the one or more files being saved to the file system; and reconnect the system to the network.

Example 25 is the system of example(s) 21, wherein the memory device further comprises instructions that are executable by the processing device for causing the processing device to identify the ransomware pattern by: providing the first system calls, second system calls, or one or more new processes to a trained machine learning model configured to generate an output comprising the ransomware pattern; and receiving the output comprising the ransomware pattern from the trained machine learning model.

Example 26 is a method comprising: determining, by a processing device, that more than a threshold number of first system calls to an operating system involving encryption or decryption were detected from user space during a first time window; buffering, by the processing device, one or more write operations from second system calls during a second time window in response to determining that more than the threshold number of first system calls involving encryption or decryption were detected; identifying, by the processing device, a ransomware pattern based on the first system calls, the second system calls, or one or more new processes detected as being generated during the first time window or the second time window; and blocking, by the processing device, execution of the first system calls involving encryption or decryption based on the ransomware pattern.

Example 27 is the method of example(s) 26, wherein identifying the ransomware pattern further comprises: identifying a match between a dataset comprising a plurality of ransomware patterns and the one or more new processes, the first system calls, or the second system calls.

Example 28 is the method of example(s) 27, further comprising, in response to identifying the match: identifying, based on the match, one or more files associated with an encryption operation or a decryption operation from the first system calls or second system calls; setting a file system comprising the one or more files to read-only by buffering write operations to the file system; moving the one or more files from the file system to an isolated storage system; and disconnecting the system from a network.

Example 29 is the method of example(s) 28, further comprising, subsequent to moving the one or more files to the isolated storage system: re-enabling write operations to the file system; restoring a backup of the operating system that was saved prior to the one or more files being saved to the file system; and reconnecting the system to the network.

Example 30 is the method of example(s) 26, wherein identifying the ransomware pattern further comprises: providing the first system calls, second system calls, or one or more new processes to a trained machine learning model configured to generate an output comprising the ransomware pattern; and receiving the output comprising the ransomware pattern from the trained machine learning model.

Example 31 is a system comprising: means for detecting, from a user space, a first set of system calls to an operating system during a first time window and a second set of system calls during a second time window; means for generating an affinity score indicating a likelihood of ransomware activity based on the first set of system calls and an updated affinity score based on the second set of system calls; and means for buffering one or more write operations from the first set of system calls during a second time window based on the affinity score and for blocking execution of the one or more write operations based on the updated affinity score exceeding a predefined threshold.

The foregoing description of certain examples, including illustrated examples, has been presented only for the purpose of illustration and description and is not intended to be exhaustive or to limit the disclosure to the precise forms disclosed. Numerous modifications, adaptations, and uses thereof will be apparent to those skilled in the art without departing from the scope of the disclosure.

## Claims

1. A method comprising:
detecting, by a processing device executing from a user space of an operating system, a first set of system calls to the operating system within a first time window;
generating, by the processing device, an affinity score associated with a pattern of ransomware activity detected in the first set of system calls;
buffering, by the processing device, first write operations from the first set of system calls during a second time window in response to generating the affinity score;
updating, by the processing device, the affinity score based on a second set of system calls to the operating system detected from the user space during the second time window; and
blocking, by the processing device, execution of first write operations from the first set of system calls and second write operations from the second set of system calls based on the updated affinity score exceeding a predefined threshold.

2. The method of claim 1, further comprising:
determining that the updated affinity score does not exceed the predefined threshold; and
subsequent to the second time window, executing the first write operations and the second write operations based on the updated affinity score not exceeding the predefined threshold.

3. The method of claim 1, wherein generating the affinity score comprises:
detecting the pattern of ransomware activity within the first set of system calls by comparing the first set of system calls to a dataset comprising a plurality of ransomware patterns.

4. The method of claim 3, wherein the affinity score quantifies similarity between the pattern of ransomware activity detected within the first set of system calls and a ransomware pattern of the plurality of ransomware patterns from the dataset.

5. The method of claim 1, wherein generating the affinity score comprises:
providing the first set of system calls as input to a trained machine learning model configured to generate an output comprising the affinity score; and
receiving the output comprising the affinity score from the trained machine learning model.

6. The method of claim 1, further comprising, in response to the updated affinity score exceeding the predefined threshold:
transmitting a notification of ransomware activity in the first set of system calls and the second set of system calls; and
continuing buffering and blocking write operations in system calls for the operating system.

7. The method of claim 1, wherein the first write operations or second write operations comprise encryption operations or decryption operations.

8. A non-transitory computer-readable medium comprising instructions that when executed by a processing device cause the processing device to carry out the method of any of claims 1 to 7.

9. A system comprising:
a kernel space of an operating system; and
a user space of the operating system, the user space configured to:
detect, within a first time window, a first set of system calls of the operating system that are exposed to the user space by the kernel space;
generate an affinity score indicating a likelihood of ransomware activity associated with the first set of system calls;
buffer one or more write operations from the first set of system calls based on the affinity score during a second time window;
update the affinity score based on a second set of system calls detected during the second time window; and
block execution of the one or more write operations based on the updated affinity score exceeding a predefined threshold.

10. The system of claim 9, wherein the user space is further configured to:
determine that the updated affinity score does not exceed the predefined threshold; and
subsequent to the second time window, execute the one or more write operations based on the updated affinity score not exceeding the predefined threshold.

11. The system of claim 10, further comprising:
a dataset comprising a plurality of ransomware patterns,
wherein the user space is further configured to generate the affinity score by detecting a ransomware pattern within the first set of system calls by comparing the first set of system calls to the plurality of ransomware patterns in the dataset.

12. The system of claim 11, wherein the affinity score quantifies similarity between the ransomware pattern detected within the first set of system calls and a ransomware pattern of the plurality of ransomware patterns from the dataset.

13. The system of claim 9, wherein the user space is further configured to generate the affinity score by:
providing the first set of system calls as input to a trained machine learning model configured to generate an output comprising the affinity score; and
receiving the output comprising the affinity score from the trained machine learning model.

14. The system of claim 9, wherein the user space is further configured to, in response to the updated affinity score exceeding the predefined threshold:
transmit a notification of ransomware activity in the first set of system calls and the second set of system calls; and
continue buffering and blocking write operations in system calls for the operating system.

15. The system of claim 9, wherein the first write operations or second write operations comprise encryption operations or decryption operations.
